Europäisches Patentamt

European Patent Office

Office européen des brevets

(19)

(11) Veröffentlichungsnummer: **0 128 236**
**B1**

(12) **EUROPÄISCHE PATENTSCHRIFT**

(45) Veröffentlichungstag der Patentschrift:
**28.01.87**

(51) Int. Cl.⁴: **G 21 F 5/00**

(21) Anmeldenummer: **83107568.4**

(22) Anmeldetag: **01.08.83**

(54) **Anordnung zum Aufnehmen abgebrannter Kernreaktor-Brennstäbe und Verfahren in ihrer Handhabung.**

(30) Priorität: **03.06.83 DE 3320071**

(43) Veröffentlichungstag der Anmeldung:
**19.12.84 Patentblatt 84/51**

(45) Bekanntmachung des Hinweises auf die Patenterteilung:
**28.01.87 Patentblatt 87/5**

(84) Benannte Vertragsstaaten:
**BE CH DE FR LI SE**

(56) Entgegenhaltungen:
**EP - A - 0 005 623**
**DE - A - 2 157 133**
**DE - A - 2 259 669**
**FR - A - 2 384 326**
**GB - A - 2 106 442**

(73) Patentinhaber: **Siemens Aktiengesellschaft Berlin und München, Wittelsbacherplatz 2, D-8000 München 2 (DE)**

(72) Erfinder: **Rohr, Franz, Lange Zeile 64, D-8520 Erlangen (DE)**

ACTORUM AG

## Beschreibung

Die Erfindung betrifft eine Anordnung nach dem Oberbegriff des Patentanspruches 1.

Beim Betrieb von Kernreaktoren in Kernkraftwerken ist es notwendig, die mit Brennstäben bestückten Brennelemente in periodischen Intervallen auszuwechseln. Die entnommenen Brennstäbe werden entweder einer Wiederaufbereitung oder einer Endlagerung zugeführt. Wegen des weltweiten Engpasses sowohl bei der Wiederaufbereitung, wie bei der Endlagerung besteht der Wunsch, den Aufwand für die Zwischenlagerung möglichst gering zu halten. Dieses Ziel kann dadurch erreicht werden, dass die Brennstäbe in möglichst dichter Packung in Behältern gestapelt werden, die sich sowohl für die Lagerung, wie für den Transport der Brennstäbe eignen.

Ein Behälter dieser Art ist aus der europäischen Patentschrift 00 05 623 bekannt. Bei diesem Behälter, der einen die Brennstäbe tragenden Boden und diese umschliessende Seitenwände aufweist, ist zum Einsetzen der Brennstäbe eine Leitplatte vorgesehen, die an ihrer den Brennstäben zugewandten Seite die Lage der einzelnen Brennstäbe bestimmende Nuten aufweist, an denen die eingeführten Brennstäbe anliegen. Nachteilig ist bei diesem Behälter zum einen, dass die Stäbe schon wegen der Materialstärke der Leitplatte nicht dicht aneinanderliegend gelagert werden können und dass zum anderen die Führungsmittel für die Leitplatte eine im Längsschnitt pyramidenförmige Stapelung der Brennstäbe erforderlich machen, so dass weder im Querschnitt, noch im Längsschnitt des Behälters eine maximale Packungsdichte möglich ist. Über den Nachteil der schlechten Raumausnutzung hinaus, ergibt sich daraus der weitere Nachteil einer relativ schlechten Ableitung der von den Brennstäben entwickelten Nachzerfallswärme nach aussen.

Der Erfindung liegt die Aufgabe zugrunde, diese Nachteile zu beseitigen und eine Anordnung zu schaffen, mit der es möglich ist, die maximale Packungsdichte der Brennstäbe im Behälterinneren nach aussen zu erreichen.

Diese Aufgabe wird durch die im Patentanspruch 1 angegebene Erfindung gelöst. Dadurch ist neben einer maximalen Raumausnutzung auch eine ausgezeichnete Wärmeableitung gewährleistet; denn durch die untereinander und mit der Behälter-Mantelfläche in Berührung stehenden Brennstäbe ist eine gute Wärme-Querleitfähigkeit erreicht, so dass die gesamte Behälter-Mantelfläche als Kühlkörper nutzbar gemacht ist.

Ein besonderes Problem bei der Umsetzung der Brennstäbe vom Brennelement in den Lagerungsbehälter besteht darin, dass die Einzelentnahme der über 200 Brennstäbe eines Brennelementes und deren Überführung in den Lagerungsbehälter mit einem erheblichen Zeitaufwand verbunden ist. Dieser Nachteil wird durch die Ausbildung der Führungseinsätze nach den Patentansprüchen 3, 4 oder 5 vermieden, die es erlauben, dass die Brennstäbe eines Brennelementes mindestens teilweise gleichzeitig in die Dichtsetzvorrichtung eingeführt werden können, wobei es theoretisch durchaus möglich wäre, alle Brennstäbe gleichzeitig aus dem Brennelement in die Dichtsetzvorrichtung zu überführen.

Ein weiteres Problem besteht darin, dass die Nachzerfallswärme der dichtgesetzten Brennstäbe vor allem in der Nasslagerungsphase möglichst gut abgeführt werden muss. Dies gelingt mit der in Patentanspruch 9 angegebenen Ausgestaltung.

Im Patentanspruch 10 ist ein Verfahren angegeben, mit dem es auf besonders einfache Weise möglich ist, durch aufeinander abgestimmte Schritte der Handhabung von Behälter, Dichtsetzvorrichtung und Führungseinsatz das Umladen und Dichtsetzen der Brennstäbe vorzunehmen.

In Patentanspruch 11 ist ein weiterer Verfahrensschritt angegeben, der es erlaubt, die von Brennstäben nicht besetzten Plätze des Behälterquerschnittes für Kühlungszwecke auszunutzen.

Zwei Ausführungsbeispiele der Erfindung werden anhand der Zeichnung im folgenden näher erläutert. Es zeigen:

Fig. 1 den Längsschnitt durch die erfindungsgemässe Anordnung mit darin noch verankertem, mit Brennstäben gefüllten Behälter,

Fig. 2 einen Querschitt durch den gefüllten Behälter,

Fig. 3 die Dichtsetzvorrichtung mit eingesetztem Behälter-Bodenelement bei entnommenem Mantelteil,

Fig. 4 und 5 Querschnitte durch die Dichtsetzvorrichtung nach Fig. 3 in verschiedenen Ebenen,

Fig. 6 eine Draufsicht auf ein Brennstab-Führungsmittel in der eintrittseitigen Querschnittsebene,

Fig. 7 eine Ausführungsform der austrittseitigen Querschnittsebene der Führungsmittels nach Fig. 6,

Fig. 8 einen Längsschnitt durch die teilweise mit Brennstäben gefüllte Dichtsetzvorrichtung, darüber angeordnetem Brennelement und über diesem dargestellter Druckvorrichtung,

Fig. 9 die mit Brennstäben gefüllte Dichtsetzvorrichtung mit darüber angeordneter Abziehvorrichtung für das Führungsmittel,

Fig. 10 die Dichtsetzvorrichtung nach Fig. 8 nach dem Dichtsetzen der eingefüllten Brennstäbe und darüber an einer Haltevorrichtung angeordnetem Mantelteil mit aufgesetztem Kopfteil,

Fig. 11 den Längsschnitt durch eine Dichtsetzvorrichtung in einer anderen Ausführungsform als Fig. 3 mit darüber angeordnetem Brennelement und aufgesetzter Druckvorrichtung,

Fig. 12 und 13 Querschnitte durch die Dichtsetzvorrichtung nach Fig. 11 in verschiedenen Ebenen,

Fig. 14 einen Längsschnitt durch die teilweise mit Brennstäben gefüllte Dichtsetzvorrichtung mit aufgesetzter Abziehvorrichtung für das Führungsmittel,

Fig. 15 einen Längsschnitt durch den Behälter mit abnehmbarem Kopfteil und Bodenelement.

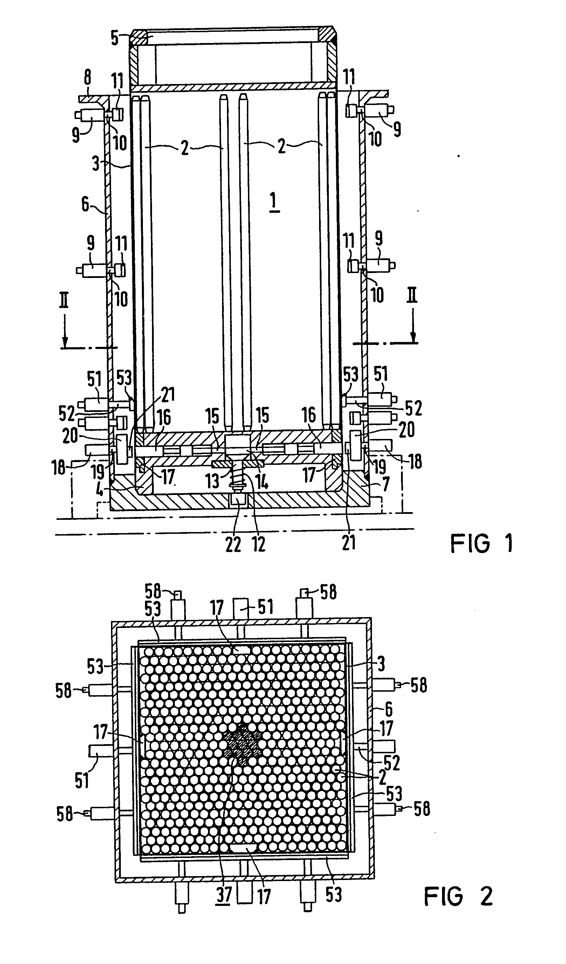

Die in Fig. 1 dargestellte Anordnung besteht im wesentlichen aus dem Behälter 1 zur Aufnahme der Brennstäbe 2 in dichtest möglicher Packung mit einem Mantelteil 3, einem betriebsmässig lösbaren Bodenelement 4 und einem Kopfteil 5. Der Behälter ist umgeben von der sogenannten Dichtsetzvorrichtung mit einem Mantelteil 6, einem mit diesem fest verbundenen Bodenteil 7 und einem umlaufenden Flansch 8.

Aus der Querschnittsdarstellung in Fig. 2 ist zu erkennen, dass der Behälter 1 einen rechteckigen Querschnitt solcher Kantenlänge besitzt, dass nach dem Dichtsetzen in hexagonal dichtester Packung etwas mehr als die doppelte Menge von Brennstäben eines Brennelementes im Behälter unterzubringen ist. Um dies zu erreichen, besitzt die Dichtsetzvorrichtung in unterschiedlichen horizontalen Ebenen am den Behälter-Mantelteil 3 umgebenden Mantelteil 6 befestigte Hubelemente 9, die über Kolbenstangen 10 mit Drucklaschen 11 verbunden sind, welche in noch zu beschreibende Art die eingeführten Brennstäbe 2 in der gewünschten Weise dichtsetzen. Die Drucklaschen sind mit Führungsbolzen 58 verbunden, die in am Mantelteil 6 gehalterten Linearführungsbuchsen gleitend gelagert sind. Das Bodenelement 4 (Fig. 1) kann sowohl mit dem Mantelteil 3 des Behälters 1 wie auch mit dem Mantelteil 6 der Dichtsetzvorrichtung gekuppelt und von diesen entkuppelt werden. Falls der Behälter einen quadratischen Querschnitt erhalten soll, muss der Abstand der Brennstäbe innerhalb der Reihe in geringer Abweichung von der hexagonal dichtesten Packung zugunsten des Reihenabstandes etwas vergrössert werden.

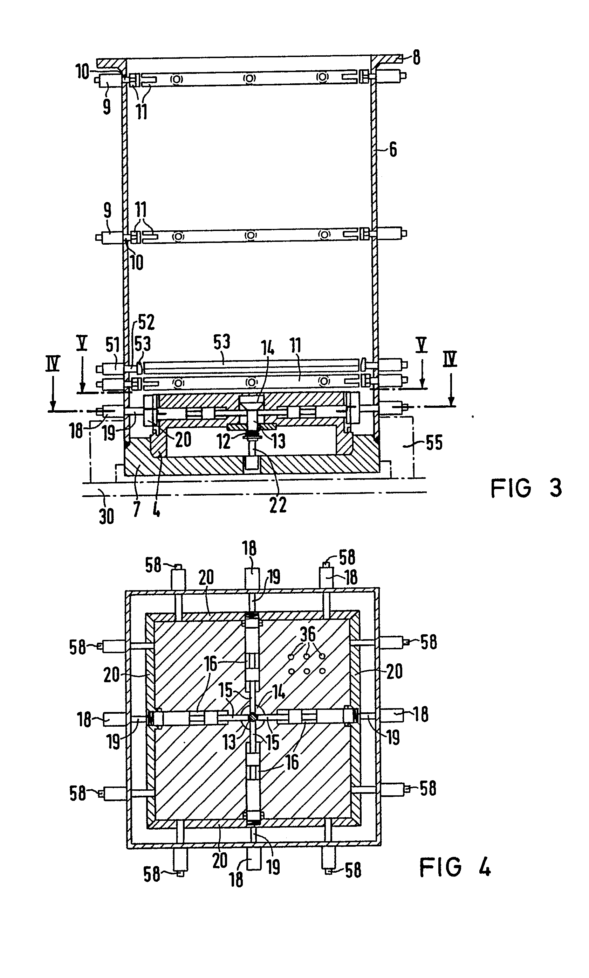

In Fig. 3 ist die Dichtsetzvorrichtung ohne den Behälter-Mantelteil 3 jedoch mit eingesetztem Behälter-Bodenelement 4 dargestellt. Um den Kupplungs- und Entkupplungsvorgang zu bewerkstelligen, besitzt das Behälter-Bodenelement 4 eine zentral betätigbare Kupplungsvorrichtung, bestehend aus einem gegen die Kraft der Feder 12 von einem Hubelement 22 vertikal verschiebbaren Hubbolzen 13, der mit einem konischen Aufsatz 14 versehen ist, der in der unteren Stellung des Hubbolzens die vier in Buchsen 16 gelagerten Haltestössel 15 (Fig. 4) derart nach aussen drückt, dass diese mit entsprechenden Laschen 17 (Fig. 1) des Behälter-Mantelteiles 3 in Eingriff gelangen, so dass dieser mit dem Bodenelement 4 gekuppelt wird. Gleichzeitig werden nicht dargestellte Druckfedern gespannt. Das Entkuppeln geschieht auf umgekehrte Weise dadurch, dass, wie in Fig. 3 dargestellt, der Hubbolzen 13 vom Hubelement 22 in seine obere Endstellung gedrückt wird, so dass die Haltestössel 15 mittels Federkraft wieder aus den Laschen 17 herausgezogen werden und damit den Mantelteil 3 des Behälters freigeben.

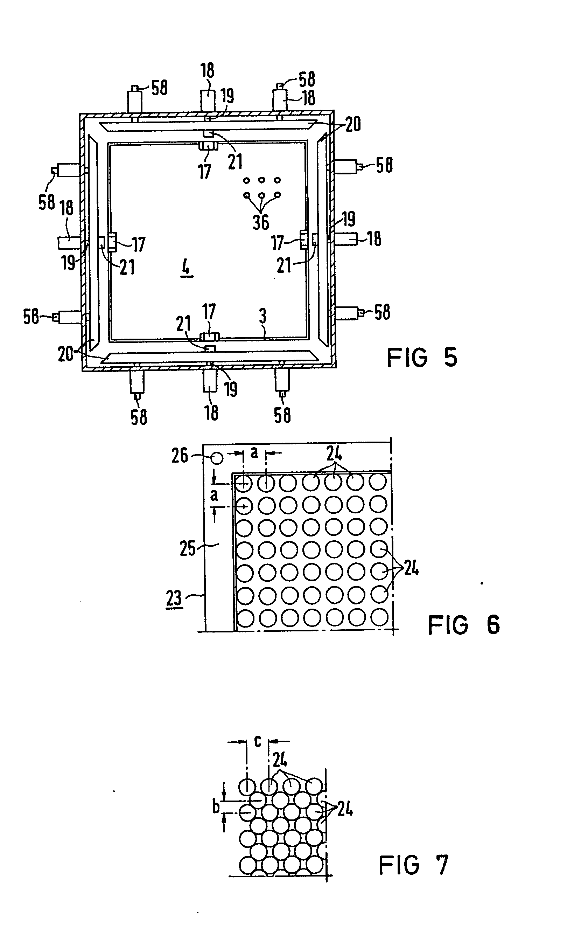

Um nun, wie in Fig. 3 gezeigt, das Bodenelement 4 mit dem Mantelteil 6 der Dichtsetzvorrichtung zu verbinden, besitzt diese von Hubelementen 18 betätigte Hubkolben 19. Diese sind, wie in den Fig. 4 und 5 dargestellt, mit Drucklaschen 20 verbunden, in die Verriegelungsbolzen 21 (Fig. 1) federnd eingesetzt sind. Beim Betätigen der Hubelemente 18 drücken diese die Laschen 20 an das Bodenelement 4 an, vergrössern damit dessen Fläche und führen gleichzeitig die Verriegelungsbolzen 21 (Fig. 1) in die Führungsbuchsen 16 der Haltestössel 15 ein, so dass das Behälter-Bodenelement 4 mit der Dichtsetzvorrichtung verriegelt ist. Der Endzustand dieses Vorganges ist in Fig. 4 schnittbildlich dargestellt. Als Betätigungsmittel kommen bekannte elektromechanisch oder hydraulisch betätigbare Anordnungen in Betracht. Falls ein Durchbohren des Mantelteiles aus Gründen der späteren Abdichtung des Behälters unerwünscht ist, kann die Verriegelung auch entfallen.

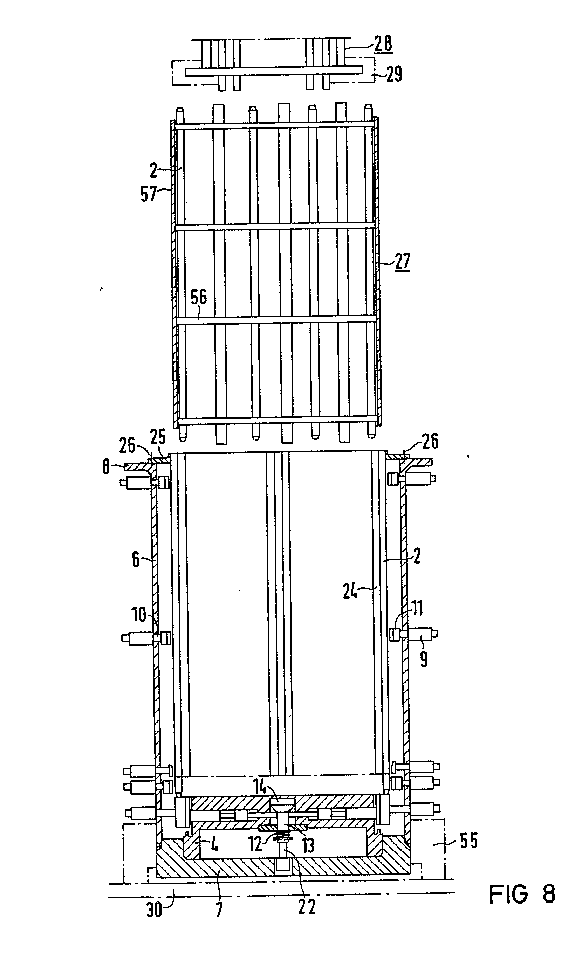

In der in Fig. 3 gezeigten Form ist die Dichtsetzvorrichtung zur Aufnahme eines Führungsmittels zum Einführen der Brennstäbe 2 vorbereitet. Als ein solches Führungsmittel kommt ein Bündel von untereinander fest verbundenen Führungsrohren in Betracht. Dieses Führungsrohrbündel kann so gestaltet sein, dass es aus geraden Rohren besteht und eine Querschnittsgeometrie (Fig. 7) aufweist, bei der jedes der Rohre (24), mit Ausnahme derjenigen der äusseren Reihen, von je vier Rohren umschlossen ist, wobei die Rohre in einer Richtung mit dem Achsabstand b auf Lücke aneinanderliegen, während ihr Abstand c in der dazu senkrechten Richtung so bemessen ist, dass sich die Brennstäbe gegenseitig derart umschliessen, dass sie nicht verklemmen oder aus dem Verband ausschlüpfen können. Dabei sind die Brennstäbe allerdings nur einzeln aus dem Brennelement in die Führungsrohre einschiebbar. Wenn der Achsabstand c dieser Rohre 24 hingegen gleich dem Achsabstand a (Fig. 6) der Brennelemente gewählt wird, besteht die Möglichkeit, die Brennestäbe auch reihenweise einzuschieben. Als weitere Gestaltungsmöglichkeit kann die Geometrie der eintrittseitigen Querschnittsebene, wie in Fig. 6 gezeigt, gleich derjenigen des Brennelementes mit dem Achsabstand a in beiden Richtungen bei quadratischer Form gewählt werden, während der austrittseitige Querschnitt die vorbeschriebene, in Fig. 7 gezeigte Geometrie behält. Dabei ergibt sich eine von der eintrittseitigen zur austrittseitigen Ebene hin von aussen nach innen abnehmende leicht S-förmige Biegung der Rohre. Dies hindert das Durchschiebenen der Brennstäbe im allgemeinen nicht, weil die Biegung im Flexibilitätsbereich der Brennstäbe liegt. In ein so gestaltetes Führungsrohrbündel können die Brennstäbe auch gruppenweise oder als kompletter Satz in einem Arbeitsgang eingeführt werden. Dabei kann der Eintrittsquerschnitt rechteckig gewählt sein, so dass die Stäbe von zwei Brennelementen nebeneinanderliegend einführbar sind. Ein in der einen oder anderen Art gestaltetes Führungsrohrbündel ist eintrittseitig in einem Rahmen 25 gehaltert, so dass es in die Dichtsetzvorrichtung, wie in Fig. 8 gezeigt, eingeführt werden kann. Dabei muss der Querschnitt der Dichtsetzvorrichtung dem Eintrittsquerschnitt des Führungsrohrbündels gleich sein. Der Rahmen 8 der Dichtsetzvorrichtung und 25 des Führungsrohrbündels besitzen deckungsgleiche Bohrungen 26, in welche nicht dargestellte Zentrierbolzen einsetzbar sind.

Nun werden, entsprechend der Darstellung in Fig. 8, ein Brennelement 27, bei dem vorher Kopf- und Fussteil entfernt worden sind und das in den Abstandshaltern 56 mit Hilfe einer Haltervorrichtung 57 gehaltert ist, und über diesem eine Druckvorrichtung 28, etwa mit Hilfe eines Koordinaten-Transportsystems 29, so zueinander zentriert, dass mit Hilfe der Druckvorrichtung 28 die Brennstäbe 2 entweder einzeln, reihenweise, gruppenweise oder, falls dies technisch möglich ist, als kompletter Satz aus dem Brennelement in die Führungsrohre 24 eingeschoben werden können. Dabei kann jeder Brennstab, falls dies notwendig erscheint, in eine bestimmte definierbare Position eingeführt werden.

Das Einschieben von Brennstäben aus einem Brennelement in das Führungsrohrbündel ist von der Querschnittsgeometrie der Brennstäbe im Brennelement und auch von der äusseren Form des Brennelementes prinzipiell unabhängig. Falls die Geometrie der Eintrittsebene des Führungsrohrbündels der Brennstabgeometrie des Brennelementes nicht angepasst werden kann, können Druckvorrichtung 28 und Brennelement 27 mit Hilfe der Koordinaten-Transportsysteme 29, 30 und 55 dem Führungsrohrbündel derart zugeordnet werden, dass auch bei nicht deckungsgleicher Querschnittsgeometrie von Brennstäben und Führungsrohrbündel alle Brennstäbe positionsbestimmt in das Führungsrohrbündel einschiebbar sind.

Die Führungsrohre besitzen einen etwas grösseren Innendurchmesser als der Aussenduchmesser der Brennstäbe, so dass diese auch durch die Führungsrohre geschoben werden können, wenn die Brennstäbe, was häufig vorkommt, eine leichte Verbiegung aufweisen.

Nachdem das eine Brennelement entleert ist, wird die Dichtsetzvorrichtung mit Hilfe des Koordinaten-Transportsystems 55, 30 einem zweiten Brennelement zugeordnet, so dass dessen Brennstäbe ebenfalls in die Dichtsetzvorrichtung eingedrückt werden können. Wenn dieser Vorgang beendet ist, befinden sich die Brennstäbe in den Führungsrohren mit einer Packungsdichte, die derjenigen der Führungsrohre 24 in Fig. 7 entspricht.

Wegen der austrittseitigen Geometrie des Rohrbündels und der Wandstärke der Führungsrohre ist dies selbstverständlich nicht die dichtest mögliche Packung. Um diese zu erreichen, muss das Führungsrohrbündel 23 unter Zurücklassung der Brennstäbe 2 aus der Dichtsetzvorrichtung entfernt werden, so dass die Stäbe auf noch zu beschreibende Weise in die dichtest mögliche, in Sonderheit hexagonal dichteste Packung gepresst werden können. Die austrittseitige Geometrie des Führungsrohrbündels hat den Vorteil, dass der einzelne Brennstab von vier Seiten stabil umschlossen ist und in der Phase zwischen dem Entfernen des Führungsrohrbündels und dem Dichtsetzen seine Lage sicher beibehält und insbesondere in den Randlagen nicht verklemmt.

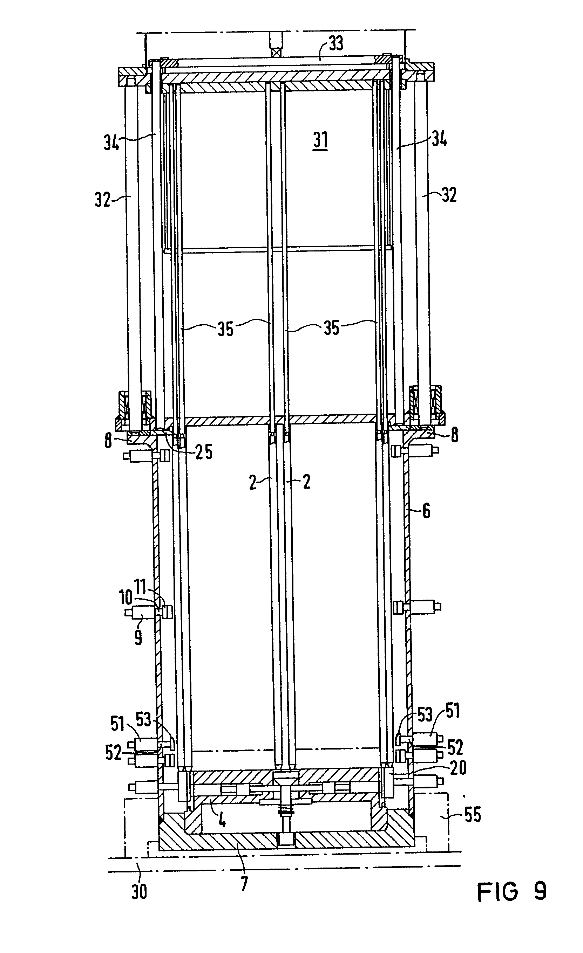

Das Herausziehen des Führungsrohrbündels 23 geschieht mit einer speziellen Abziehvorrichtung 31, die in Fig. 9 dargestellt ist. Eine solche Abziehvorrichtung ist aus der DE-A-32 42 878 bekannt und bedarf daher keiner näheren Funktionserläuterung. Sie besteht im wesentlichen aus Befestigungs- und Zentrierzylindern 32, die auf den Flansch 8 der Dichtsetzvorrichtung aufgesetzt und befestigt werden, aus einer Ziehvorrichtung 33, welche über Stangen 34, die mit dem Rahmen 25 des Führungsrohrbündels 23 verbunden werden, sowie Niederhaltestangen 35, deren Anzahl der Anzahl der Brennstäbe entspricht und welche diese beim Hochziehen des Führungsrohrbündels in der eingeführten Position festhalten. Das Dichtsetzen der eingeführten Brennstäbe geschieht nun auf folgende Weise: Zunächst wird das Führungsrohrbündel langsam hochgezogen. Dabei werden gleichzeitig die Drucklaschen 11 (Fig. 3) der untersten Ebene gegen das Brennstabbündel gefahren, so dass dieses zunächst im Fussbereich auf Block dichtgesetzt werden. Wenn das Führungsrohrbündel 23 soweit hochgezogen ist, dass es die nächste Ebene der Drucklaschen 11 erreicht hat, werden auch diese betätigt, so dass dort das gleiche geschieht wie in der Ebene darunter. Nach vollständigem Ausfahren des Führungsrohrbündels 23 ist das gesamte Brennstabbündel in der Dichtsetzvorrichtung dichtgepresst.

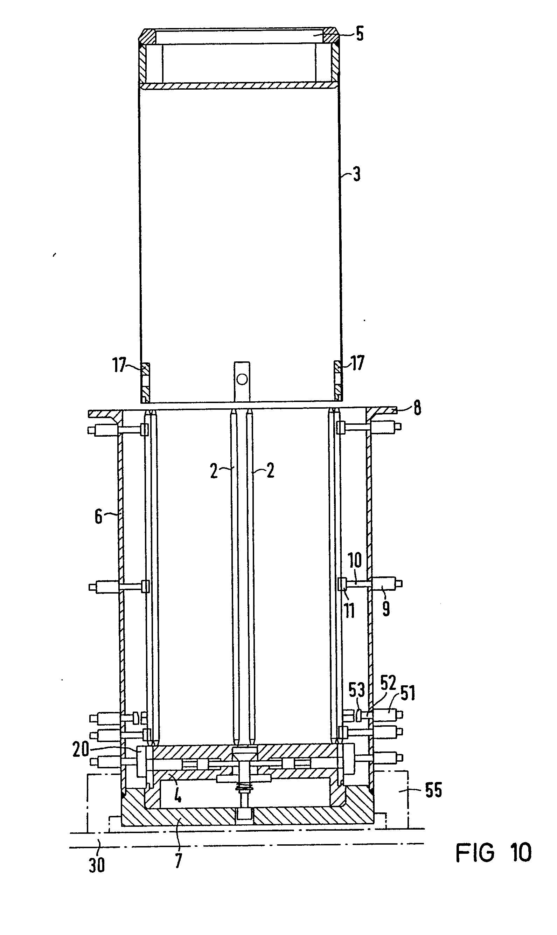

Nun gelangt die Dichtsetzvorrichtung mit den eingeführten und dichtgepressten Brennstäben mit Hilfe des Koordinaten-Transportsystems 55, 30 in die in Fig. 10 dargestellte Position, in der sich die Dichtsetzvorrichtung unter dem Behälter-Mantelteil 3, 5 befindet. Dieses wird nun in der Weise auf das Brennstabbündel aufgeschoben, dass bei Erreichen der obersten Ebene der Drucklaschen 11 diese zurückgenommen werden, so dass zwischen Brennstabbündel und Drucklaschen ein freier Raum entsteht, der das weitere Absenken des Mantelteiles ermöglicht. Bei Erreichen der nächsten Drucklaschenebene geschieht das gleiche und nach Lösen der Drucklaschen der untersten Ebene und dem Zurückfahren auch der Boden-Drucklaschen 20 (Fig. 3, 4 und 5) gelangt der Behälter-Mantelteil 3 wieder in die in Fig. 1 dargestellte Position und kann mit Hilfe des Hubelementes 12, 13, 14, 22 wiederum mit seinem Bodenelement 4 gekuppelt, mit Hilfe etwa der vorhandenen Brennelement-Lademaschine aus der Dichtsetzvorrichtung entfernt und einem Lagerungsbecken zugeführt werden.

Falls die so gestapelten Brennstäbe noch eine erhebliche Nachzerfallswärme entwickeln, kann der Behälter zunächst für einige Zeit nass gelagert werden. Um dabei eine ausreichende Kühlmittelzirkulation sicherzustellen, können sowohl das Bodenelement 4 wie das Kopfteil 5 des Behälters mit Bohrungen 36 (Fig. 4, 5) versehen werden. Nach Beendigung der Nasslagerungsphase können diese Teile vor dem Einführen des Behälters in die Trockenlagerung gegen nicht perforierte Teile ausgewechselt und abgedichtet werden. Dazu kann das Kopfteil 5 mit ähnlichen Kupplungsmitteln ausgestattet sein, wie das Bodenelement 4. Eine weitere Verbesserung der Ableitung der Nachzerfallswärme ist auf folgende Weise möglich: Aufgrund der geometrischen Verhältnisse zwischen dem Lagerungsbehälter und dem Brennelement ergibt sich, dass der Lagerungsbehälter mehr Stäbe aufnehmen kann, als es dem Inhalt zweier Brennelemente entspricht. Es entstehen also Leerstellen in dem dichtgesetzten Brennstabbündel, die von Attrappen ausgefüllt werden müssen. Da nun die Temperatur in der Mitte des dichtgesetzten Brennstabbündels am höchsten ist, können die Attrappen 37 (Fig. 2) im Zentrum des Brennstabbündels konzentriert werden. Wenn diese Atrappen nach Materialauswahl und Querschnittsform so gestaltet werden, dass sie ein Maximum an Wärmeableitung sicherstellen, können die an sich nutzlosen Leerstellen für eine schnellere Temperaturabsenkung genutzt werden. Selbstverständlich können die Attrappen, falls sich herausstellen sollte, dass die Konzentration im Zentrum nicht optimal ist, auch in geeigneter Geometrie über den Querschnitt verteilt werden.

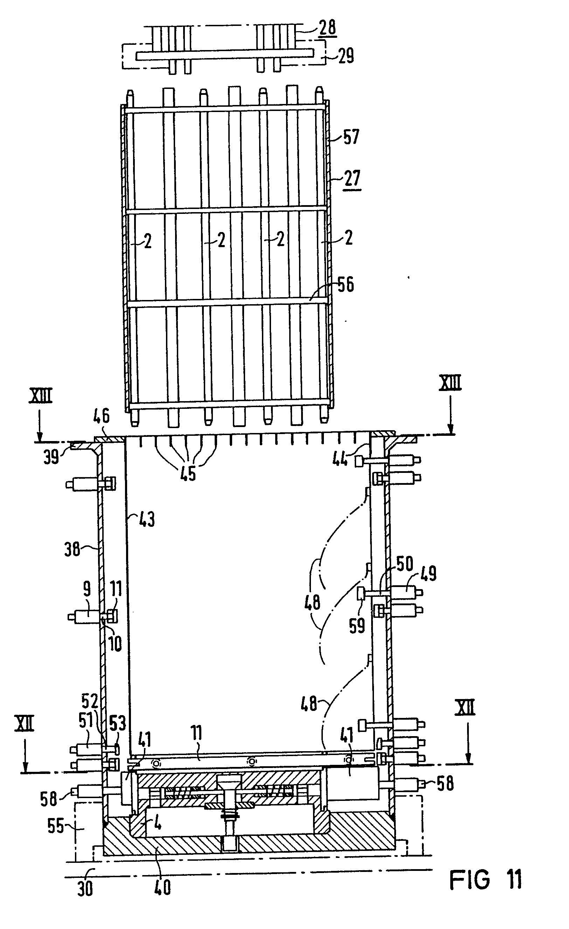

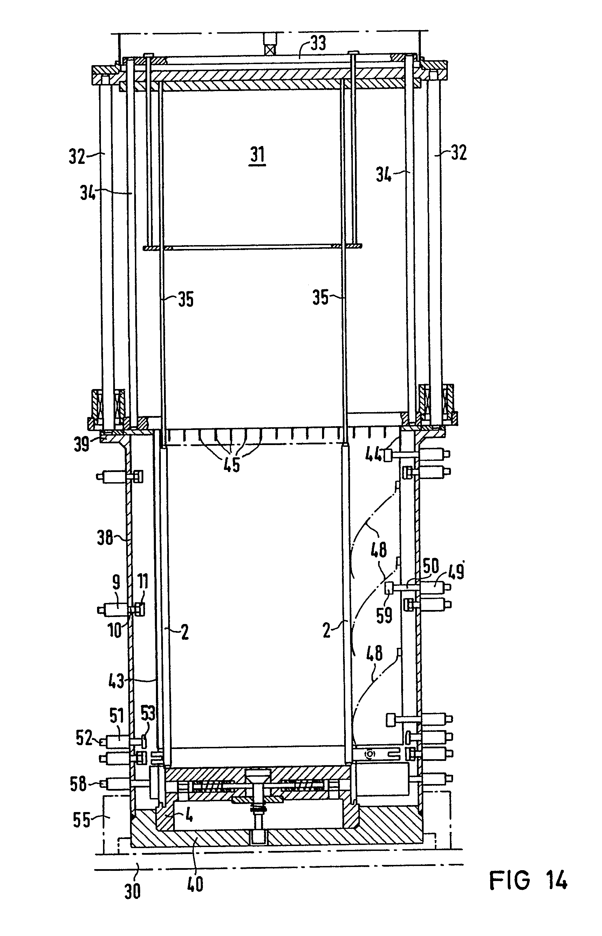

Ein weiteres Ausführungsbeispiel mit einem prinzipiell anderen Führungsmittel zum Einführen der Brennstäbe in die Dichtsetzvorrichtung ist in den Figuren 11 bis 14 dargestellt. Dabei entspricht der Behälter 1 sowohl hinsichtlich seiner technischen Gestaltung als auch seiner geometrischen Abmessungen dem in Fig. 1 dargestellten. Der den folgenden Ausführungsbeispielen zugrundeliegende Gedanke geht davon aus, dass es möglich sein soll, die Brennstäbe nicht durch einzelne, eventuell gebogene Führungsrohre zu drücken, sondern ohne Kraftaufwand zunächst lose in die Dichtsetzvorrichtung einzusetzen.

Fig. 11 zeigt eine solche Dichtsetzvorrichtung, die wiederum aus einem rechteckigen Mantelteil 38, einem oberen umlaufenden Flansch 39, sowie einem Bodenelement 40 besteht. Die Anordnung der Hubelemente 9 mit den Kolbenstangen 10, welche entsprechende Drucklaschen 11 betätigen, und der Führungsbolzen 58 entspricht den bereits beschriebenen. In Höhe des Aufnahmebodens des Behälter-Bodenelementes sind ebenfalls von Hubelementen 18 über Kolbenstangen 19 betätigte, und mittels Führungsbolzen 58 geführte, horizontal verstellbare Laschen 41 angeordnet, die sich von den vorgenannten lediglich in ihren Massen unterscheiden. Sie vergrössern die nutzbare Fläche des Behälter-Bodenelementes in der gewünschten Weise. Diejenigen Bauteile, die nach Ausführung und Funktion denjenigen des vorherigen Beispiels gleich sind, sind mit gleichen Bezugszeichen versehen.

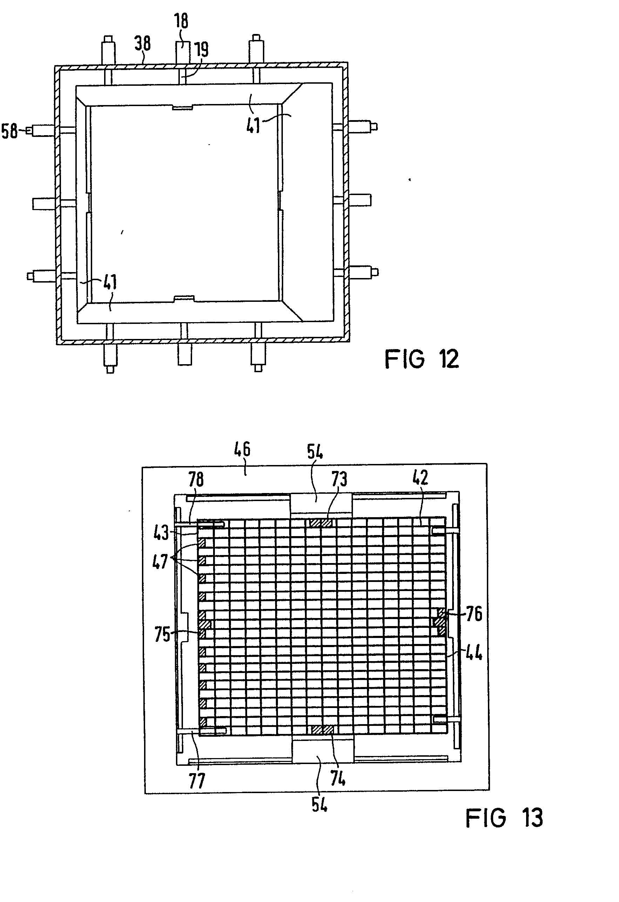

Der wesentliche Unterschied zum vorherigen Ausführungsbeispiel besteht in der Ausbildung des Führungsmittels. Dieses Führungsmittel ist nicht aus einer der Anzahl der unterzubringenden Brennstäbe entsprechenden Anzahl gebündelter Rohre, sondern aus einer der Anzahl der Reihen der unterzubringenden Brennstäbe plus eins gleichen Zahl von parallelen Blechen gebildet, deren Abstand und Länge so gewählt sind, dass, wie im vorigen Beispiel, die Brennstäbe einzeln, reihenweise, gruppenweise oder als kompletter Satz in das Führungsmittel eingeführt werden können. Um den Brennstäben in beiden Richtungen eine ausreichende Führungsstabilität zu verleihen, und die für das Dichtsetzen erforderliche Grundposition der Brennstabreihen sicherzustellen, sind die parallelen Führungsplatten 42 (Fig. 13) auf der einen Stirnseite mit einer Anschlagplatte 43 und auf der anderen Stirnseite oben mit einem kurzen Blechsteg 44 (Fig. 11) versehen. Zwischen der Anschlagplatte und dem Blechsteg sind im Rastermass des Brennelementes mit den Führungsplatten fest verbundene weitere kurze Blechstege 45 angeordnet, so dass der Führungseinsatz in der Draufsicht gemäss Fig. 13 einem regelmässigen Gitter mit dem Rastermass des Brennelementes entspricht. An dem so gebildeten Führungseinsatz ist oben ein umlaufender Rechteckflansch 46 angeschweisst. Die Anschlagplatte ist zwischen je zwei übernächsten Führungsplatten mit je einer von oben nach unten durchgehende Leiste 47 versehen, deren Stärke dem Radius eines Brennstabes gleich ist. Die Höhe des Führungseinsatzes ist so gewählt, dass die Blechstege 45 mit ihrer Unterkante über die Länge der Brennstäbe etwas hinausragen, so dass die Brennstäbe nach dem Einsetzen in Richtung der Führungsbleche frei beweglich sind.

Der Führungseinsatz 42, 43, 44, 45, 46, 47 wird nun ähnlich wie derjenige des vorigen Ausführungsbeispieles in die Dichtsetzvorrichtung eingeführt und mit seinem Flansch 46 auf dem Flansch 39 der Dichtsetzvorrichtung zentriert. Dann wird die Dichtsetzvorrichtung mit dem Koordinaten-Transportsystem 55, 30 unter das jeweils zu entleerende Brennelement 27 und der zentriert darüber angeordneten Druckvorrichtung 28 gefahren, welche nun von Koordinaten-Transportsystem 29 entsprechend positioniert, die Brennstäbe einzeln, reihenweise oder gruppenweise in den Führungseinsatz drückt. Sobald die Brennstäbe auf dem Aufnahmeboden aufsitzen und demzufolge oben in Richtung der Führungsplatten frei beweglich sind, werden diese entweder durch Federn 48, die in mindestens drei Ebenen angeordnet sein müssen oder ähnlichen Konstruktionselementen, beispielsweise Hubelementen 49, 50, 59, gegen die Anschlagplatte 43 bzw. die Leisten 47 gedrückt. Nach dem Entleeren des einen Brennelementes wird die Dichtsetzvorrichtung mit Hilfe des Koordinaten-Transportsystems 55, 30 unter das zweite zu entleerende Brennelement gefahren, dessen Brennstäbe in der bereits beschriebenen Weise über den Führungseinsatz in die Dichtsetzvorrichtung eingeschoben werden. Nachdem dies geschehen ist, wird, entsprechend den Ausführungen zu Fig. 9, eine der Abziehvorrichtung 31 entsprechende Abziehvorrichtung zentriert auf die Dichtsetzvorrichtung aufgesetzt und auf die bereits beschriebene Weise der Führungseinsatz unter Zurückhaltung der eingeführten Brennstäbe aus der Dichtsetzvorrichtung entnommen. Sobald der Führungseinsatz etwas nach oben gefahren ist, werden die untersten Drucklaschen 11, wie im vorigen Ausführungsbeispiel bereits beschrieben, gegen die Brennstäbe gedrückt, so dass diese dichtgesetzt werden. Bei weiterem Hochfahren des Führungseinsatzes werden die nächsten Drucklaschen angepresst usw., so dass nach vollständigem Entfernen des Führungseinsatzes die Brennstäbe in dichtest möglicher Packung auf Block gedrückt sind. Das Aufsetzen des Behälter-Mantelteiles 3 mit Kopfteil 5 geschieht dann in der zum vorigen Ausführungsbeispiel bereits beschriebenen Weise.

Es ist stattdessen auch möglich, das Führungsmittel 42, 43, 44, 45 so zu gestalten, dass die Blechstege 45 mit ihrer Unterkante nicht über die Unterkante der Brennstäbe hinausragen, sondern im Gegenteil, der von den Führungsplatten 42 gebildete Rost als Halterung für die eingeführten Brennstäbe dient. Dadurch gelingt es, zunächst alle Brennstäbe in das Führungsmittel einzuführen und diese dann in der vorbeschriebenen Weise dichtzusetzen. Dabei können die vorerwähnten Andrückmittel entfallen.

Wenn der in Fig. 10 dargestellte Behälter-Mantelteil 3 auch im vorliegenden Ausführungsbeispiel verwendet werden soll, ist es notwendig, zugrunsten der Laschen 17 entsprechende Freiräume zu schaffen. Dazu dürfen, wie in Fig. 13 dargestellt, die beiden äusseren Reihen und die drei mittleren Reihen nicht vollständig mit Brennstäben gefüllt werden. In den äusseren Reihen müssen die in Fig. 13 schraffiert dargestellten mittleren Bereiche 73, 74 von Brennstäben freigehalten werden, während bei den drei mittleren Reihen dies für die beiden Endbereiche 75, 76 der Fall ist. In den beiden äusseren Reihen müssen demzufolge die Brennstäbe in jedem Fall von beiden Seiten dichtgesetzt werden. Dazu dienen die in Fig. 13 andeutungsweise dargestellten Druckkolben 77, 78.

Um das Einführen sowohl des Führungseinsatzes, wie auch des Behälter-Mantelteiles zu erleichtern, können im unteren Teil der Dichtsetzvorrichtung ebenfalls von Hubelementen 51, 52 betätigte, nach oben abgeschrägte Führungslaschen 53 angeordnet sein. Es ist auch selbstverständlich möglich, anstelle der Federn 48 oder einer der Anzahl der Brennstabreihen entsprechende Anzahl von Hubelementen 49, 50, 59, von je einem Hubelement betätigte, parallelgeführte kammartige Druckleisten mit einer dem Versatz der Brennstabreihen entsprechenden Kammhöhe in mehreren Ebenen vorzusehen. Es ist beim letztgenannten Ausführungsbeispiel, wie bereits beschrieben (Fig. 2), selbstverständlich auch möglich, die von Brennstäben nicht besetzten Stellen mit entsprechend plazierten gut wärmeleitenden Attrappen 37 auszufüllen. Diese können zentral oder auch an verschiedenen Stellen innerhalb des Behälter-Querschnittes angeordnet werden. Auch können, um das Einfahren des Führungseinsatzes insbesondere im letztgenannten Beispiel zu erleichtern, abgeschrägte Einführlaschen 54 (Fig. 13) am Mantelteil der Dichtsetzvorrichtung angeordnet werden.

Eine weitere Gestaltungsform des Führungsmittels 42, 43, 44, 45, 47 besteht darin, auf die Anschlagplatte 43 und die Leisten 47 zu verzichten. Die parallelen Führungsplatten 42 sind dann unterhalb der Blechstege 44, 45 zu beiden Seiten offen. Dadurch können die Brennstäbe nach dem Einsetzen in den Führungseinsatz mit Hilfe von auf beiden Seiten des rechteckigen Mantelteiles 38 angeordneten Hubelementen 49, 50, 59 auf Block gedrückt werden. Der Dichtsetzhub in Richtung der Reihe kann dadurch halbiert werden. Um einen möglichst geringen Dichtsetzhub auch quer dazu zu erreichen, ist es zweckmässig, die Blechstärke der Führungsplatten 42 so gering wie möglich zu wählen. Dazu ist es notwendig, das Teilungsmass der parallelen Plattenreihen kleiner zu machen als das Teilungsmass des Abstandhalters bzw. der Brennstäbe im Brennelement, wobei die Brennstäbe dann wiederum nur einzeln oder reihenweise eingeführt werden können.

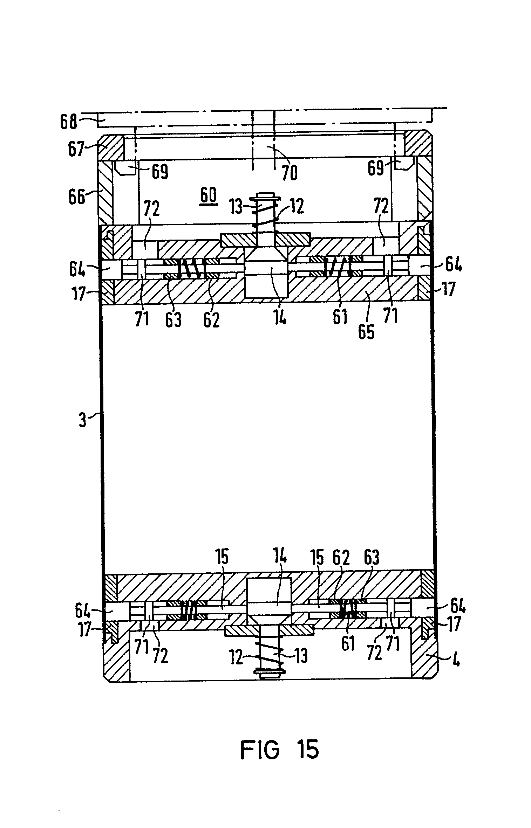

Wie bereits bei der Beschreibung des ersten Ausführungsbeispieles erwähnt, müssen vor der Einführung des Lagerungsbehälters von der Nasslagerung in die Trockenlagerung sowohl das Bodenelement 4 wie das Kopfteil 5 gegen nicht perforierte Teile ausgewechselt werden können. Um dieses Auswechseln zu erleichtern, kann das Kopfteil ähnlich ausgebildet sein wie das Bodenelement. Ein Behälter mit einem solchen Kopfteil und dem bereits beschriebenen Bodenelement 4 ist in Fig. 15 dargestellt. Der Mantelteil 3 besitzt fuss- und kopfseitig die bereits beschriebenen Laschen 17, deren dem Kopfteil 60 bzw. Bodenelement 4 zugewandte Seiten mit einer Nase versehen sind. Das Bodenelement 4 und das Kopfteil 60 besitzen an den entsprechenden Stellen rillenförmige Einfräsungen, in welche die Nasen eingreifen, so dass ein Ausbeulen des Behälter-Mantelteiles nach aussen vermieden ist. Kopfteil 60 und Bodenelement 4 sind mit gleichwirkenden zentral betätigbaren Kupplungsvorrichtungen versehen, wie sie bereits in den Figuren 3 und 4 dargestellt und beschrieben worden sind. In der gezeigten Position sind sowohl das Bodenelement 4 wie das Kopfteil 60 mit dem Behälter Mantelteil 3 gekuppelt. Zum Abnehmen von Kopfteil 60 und Bodenelement 4, etwa beim Übergang von der Nasslagerungsphase in die Trockenlagerungsphase, werden mit Hilfe entsprechender Vorrichtungen die mit dem konischen Aufsatz 14 versehenen Hubbolzen 13 gegen den Druck der Federn 12 in Richtung auf das Innere des Behälters bewegt. Unter dem Druck der gespannten Schraubenfedern 61, die zwischen je einer mit dem Tragkörper versplinteten Buchse 63 und einem mit dem jeweiligen Haltestössel 15 fest verbundenen Ring 62 eine entsprechende Kraft ausüben, werden die mit den Haltestösseln 15 verbundenen Kolben 64, welche in entsprechende Bohrungen der Laschen 17 hineinragen und die Verbindung zwischen dem Bodenelement bzw. dem Kopfteil und dem Behälter-Mantelteil herstellen, um einen solchen Betrag nach innen verschoben, dass diese den Behälter-Mantelteil freigeben. Dabei sind die Federn 12 einerseits und 61 andererseits so bemessen, dass die Federn 12 nach Entfallen der Druckausübung auf die Hubbolzen 13 diese wieder in ihre dargestellte Position zurückdrücken, wobei auch die Haltestössel 15 gegen den Druck ihrer Federn 61 wieder in die dargestellte gekuppelte Position gelangen.

Das Kopfteil 60 selbst besteht aus dem Kupplungsträger 65 und dem darüber angeordneten Deckelteil mit dem Aufsatz 66 und dem Abschlussrahmen 67. Diese das Kopfteil bildenden Teile sind miteinander verschweisst. Zur Handhabung des Kopfteiles ist ein Hubwerkzeug 68 mit Greifern 69 vorhanden, die so ausgebildet sind, dass sie sich in den Abschlussrahmen 67 einhaken können. Eine nur angedeutete rohrförmige Öffnung 70 im Zentrum des Hubwerkzeuges dient dazu, mit Hilfe einer entsprechenden Vorrichtung den Hubbolzen 13 des Kopfteiles 60 zu betätigen.

Auf den Haltestösseln 15 sind weitere Ringe 71 befestigt, die unter je einer Öffnung 72 innerhalb der Kupplungträger angeordnet und mit Hilfe eines Werkzeuges derart zugänglich sind, dass im Falle einer Verklemmung eines der Haltestössel 15 eine Ver- bzw. Entriegelung hilfsweise von aussen vorgenommen werden kann.

Üblicherweise werden für die Trockenlagerung Bodenelement und Kopfteil mit dem Mantel gasdicht verschweisst, so dass die Kupplungsvorrichtung bei den für die Trockenlagerung verwendeten Bodenelementen und Kopfteilen im Gegensatz zu den für die Nasslagerung verwendeten entfallen können.

**Patentansprüche**

1. Anordnung zum Aufnehmen abgebrannter Kernreaktor-Brennstäbe in wenigstens annähernd

kompakter Form, bestehend aus einem mehrteiligen Transport- und Lagerungsbehälter mit einem die Brennstäbe tragenden Boden und diese umschliessenden Seitenwänden sowie einem Führungsmittel zum Beladen dieses Behälters, dadurch gekennzeichnet, dass der Behälter (1) gebildet ist aus einem Mantelteil (3) mit rechteckigem, in Sonderheit quadratischem Grundriss, einem Bodenelement (4), das mit dem Mantelteil (3) betriebsmässig lösbar zu verbinden ist, wobei die Innermasse von Bodenelement (4) und Mantelteil (3) der Länge und dem Stapelquerschnitt der Brennstäbe (2) entsprechen, und einem auf den Mantelteil (3) abnehmbar aufsetzbaren Kopfteil (5); dass ein den ersten Behälter (1) aufnehmender weiterer Behälter als Dichtsetzvorrichtung (6, 7, 8) vorhanden ist, die aus einem Mantelteil (6), einem mit diesem fest verbundenen Bodenteil (7) und einem kopfseitig angeordneten Flansch (8) sowie einem am Bodenteil (7) angeordneten Hubelement (22) zum Kuppeln und Entkuppeln des Bodenelementes (4) vom Mantelteil (3) des Behälters (1) besteht und deren Innenmasse grösser gewählt sind als die Aussenmasse des Führungsmittels, so dass dieses an Stelle des Behälters (1) wechselweise in die Dichtsetzvorrichtung einsetzbar ist; dass der Mantelteil (6) der Dichtsetzvorrichtung an seiner Innenseite in Höhe des Bodenelementes (4) an dieses anschiebbare und dessen Grundfläche auf den Austrittsquerschnitt des Führungsmittels vergrössernde Drucklaschen (20) und in mehreren horizontalen Ebenen mit von Hubelementen (9, 10) einzeln horizontal bewegbaren Klemmitteln (11) versehen ist und dass das Führungsmittel als in die Dichtsetzvorrichtung (6, 8) zentriert einsetzbarer und aus dieser entnehmbarer Führungseinsatz (23, 42 bis 47) so gestaltet ist, dass die Brennstäbe (2) in einer zu deren Dichtsetzen in dichtest möglicher, in Sonderheit hexagonal dichtester Packung geeigneten Querschnittsgeometrie in die Dichtsetzvorrichtung (6, 8) eingeführt werden können, wobei die Klemmittel (11) mittels der Hubelemente (9, 10) um einen solchen Betrag horizontal bewegbar und so steuerbar sind, dass sie die Brennstäbe (2), von der Querschnittsgeometrie des Führungseinsatzes (23, 42 bis 47) ausgehend, im Verlauf von dessen Entnahme dichtsetzen.

2. Anordnung nach Anspruch 1, dadurch gekennzeichnet, dass die Querschnitte der Dichtsetzvorrichtung (6, 7), des Führungseinsatzes (23, 42 bis 47) und des Behälters (1) so gewählt sind, dass die Brennstäbe von wenigstens zwei Brennelementen aufgenommen werden können.

3. Anordnung nach Anspruch 1 oder 2, dadurch gekennzeichnet, dass als Führungseinsatz ein Bündel aus einer mindestens der Anzahl der aufzunehmenden Brennstäbe entsprechenden Anzahl von miteinander verbundenen und an einem Rahmen (25) gehalterten geraden Führungsrohren (24) benutzt ist, deren Innendurchmesser etwas grösser als der Brennstabdurchmesser ist und die so angeordnet sind, dass in allen Querschnittsebenen ihre Achsenpositionen gleichschenklige Dreiecke bilden, so dass benachbarte Führungsrohrreihen um den halben Betrag des Achsabstandes innerhalb einer Reihe gegeneinander versetzt sind.

4. Anordnung nach Anspruch 1 oder 2, dadurch gekennzeichnet, dass als Führungseinsatz ein Bündel aus einer mindestens der Anzahl der aufzunehmenden Brennstäbe entsprechenden Anzahl von miteinander verbundenen und an einem Rahmen (25) gehalterten, leicht gebogenen Führungsrohren (24) benutzt ist, deren Innendurchmesser etwas grösser als der Brennstabdurchmesser ist und die so angeordnet sind, dass in der eintrittseitigen Querschnittsebene ihre Achsenpositionen den Positionen der Brennstabachsen im Querschnitt der zu entleerenden Brennelemente entsprechen und dass in der austrittseitigen Querschnittsebene ihre Achspositionen gleichschenklige Dreiecke bilden, so dass benachbarte Führungsrohrreihen um den halben Betrag des Achsenabstandes innerhalb einer Reihe gegeneinander versetzt sind.

5. Anordnung nach Anspruch 1 oder 2, dadurch gekennzeichnet, dass als Führungseinsatz ein Bündel aus parallelen, der um eins vergrösserten Anzahl der aufzunehmenden Brennstabreihen entsprechenden Anzahl von parallelen Führungsplatten (42), benutzt ist, deren lichte Abstände etwas grösser sind als der Brennstabdurchmesser und deren Länge so gewählt ist, dass die gewünschte Anzahl von Brennstäben in dem Raum zwischen zwei Führungsblechen eingeführt werden kann und diese kopfseitig mit flachen, sich rechtwinklig zu den Führungsblechen, ebenfalls im Achsabstand der Brennstäbe im Brennelement erstreckenden und mit den Führungsblechen fest verbundenen Blechstreifen (45) versehen sind, wobei als Klemmittel zwischen je zwei Führungsblechen beidseitig angeordnete Anschlag- und Klemmittel (48, 49, 50, 59 und 43, 47) benutzt sind, von denen wenigstens eines je Führungsblechpaar horizontal beweglich ist und unterschiedlich tief in das Führungsblechpaket eintaucht, derart, dass die Brennstabreihen nach dem Einführen der Brennstäbe wechselweise um jeweils den halben Betrag des Brennstabdurchmessers gegeneinander versetzt stehen.

6. Anordnung nach Anspruch 5, dadurch gekennzeichnet, dass die Höhe zwischen der Oberfläche des Bodenelementes (4) und der Unterkante der Blechstreifen (45) etwas grösser ist, als die Länge der Brennstäbe.

7. Anordnung nach Anspruch 5, dadurch gekennzeichnet, dass die Höhe zwischen der Oberfläche des Bodenelementes (4) und der Unterkante der Blechstreifen (45) etwas kleiner ist, als die Länge der Brennstäbe.

8. Anordnung nach Anspruch 1 oder 2, dadurch gekennzeichnet, dass der Führungseinsatz aus zwei Teilen gebildet ist und der eintrittseitige Teil aus einem Bündel von mindestens der Anzahl der aufzunehmenden Brennstäbe entsprechenden Anzahl von miteinander verbundenen und an einem Rahmen (25) gehalterten, leicht gebogenen Führungsrohren (24) besteht, deren Innendurchmesser etwas grösser als der Brennstabdurchmesser gewählt ist und die so angeordnet sind, dass in der eintrittseitigen Querschnittsebene ihre Achspositionen den Positionen der Brennstabachsen im Querschnitt der zu entleerenden Brennelemente entsprechen und in der austrittseitigen Querschnittsebene ihre Achspositionen gleichschenklige Dreiecke bilden, so dass benachbarte Führungsrohrreihen um den halben Betrag des Achsabstandes innerhalb einer Reihe gegeneinander versetzt sind, und der austrittseitige Teil aus einem Bündel paralleler, der um eins vergrösserten Anzahl der aufzunehmenden Brennstabreihen entsprechenden Zahl von parallelen Führungblechen (42) gebildet ist, deren lichte Abstände etwas grösser sind als der Brennstabdurchmesser, wobei die Länge der beiden Teile etwa der Länge der Brennstäbe entspricht und die Abstände der Führungsrohrreihen und die Abstände der Führungsbleche in der Querschnittsebene des Übergangs beider Teile so gewählt sind, dass beim Einführen der Brennstäbe diese im oberen Abschnitt des Führungseinsatzes zu Reihen der erforderlichen Anzahl und Länge formiert und im unteren Abschnitt reihenweise dichtgesetzt werden können.

9. Anordnung nach einem der vorhergehenden Ansprüche, dadurch gekennzeichnet, dass das Bodenelement (4) und der Kopfteil (5) des Behälters mit Öffnungen (36) versehen sind.

10. Verfahren zur Handhabung der Anordnung nach Anspruch 3, 4 oder 5, dadurch gekennzeichnet, dass zunächst der Behälter (1) mit dem Bodenelement (4) in die Dichtsetzvorrichtung (6, 7, 8, 38, 39, 40) eingesetzt wird, dass dann das Bodenelement (4) vom Behälter-Mantelteil (3) gelöst und mit der Dichtsetzvorrichtung verbunden wird, dass nach Entfernen des Behälter-Mantelteiles (3) der Führungseinsatz auf das in der Dichtsetzvorrichtung befindliche Bodenelement (4) aufgesetzt wird, dass dann die Brennstäbe (2) einzeln oder gleichzeitig mehrfach in die entsprechenden Elemente des Führungseinsatzes eingeführt werden, dass nach dem Einführen des letzten Brennstabes der Führungseinsatz unter Zurückhaltung der eingeführten Brennstäbe nach oben aus der Dichtsetzvorrichtung entnommen wird und gleichzeitig mit zunehmendem Freiwerden der Brennstäbe, vom Boden beginnend, die Klemmittel (9, 10, 11) in der gewünschten Richtung gegen den jeweils freigewordenen Teil des Brennstabbündels gepresst werden und dieses in dichtest möglicher, in Sonderheit hexagonal dichtester, Packung zusammendrücken; dass nach der vollständigen Entnahme des Führungseinsatzes der mit dem Kopfteil (5) versehene Behälter-Mantelteil (3) von oben zentriert auf das verdichtete Brennstabbündel aufgesetzt wird, wobei die Klemmittel nach und nach gelöst werden, so dass der Behälter-Mantelteil zwischen den Klemmitteln und dem Brennstabbündel in das Bodenelement gleitet und mit diesem gekuppelt werden kann, und dass schliesslich das Bodenelement von der Dichtsetzvorrichtung gelöst und der gefüllte Behälter aus dieser herausgehoben wird.

11. Verfahren nach Anspruch 9, dadurch gekennzeichnet, dass in nicht mit Brennstäben besetzte Plätze des Brennstabbündels als Kühlattrappen ausgebildete Rohre (37), vorzugsweise im Zentrum des Stapelquerschnittes, eingefügt werden.

**Claims**

1. Arrangement for receiving burnt-out nuclear reactor fuel rods in an at least approximately compact form, consisting of a multi-part transporting- and storage container with a base holding the fuel rods, and side walls enclosing them, and a guide means for loading this container, characterised in that the container (1) is formed by a casing part (3) with a rectangular, in particular square plan, by a base element (4), which is releasably connectable in operation to the casing (3), whereby the inner dimensions of the base element (4) and casing (3) correspond to the length and to the stacked cross-section of the fuel rods (2), and by a head part (5) which can be releasably placed onto the casing (3); in that a further container receiving the first container (1) is provided as a compacting device (6, 7, 8), which consists of a casing (6), a base part (7) rigidly connected to this, a flange (8) arranged at the head end, and a lifting element (22) arranged on the base part (7) for coupling and uncoupling the base element (4) to and from the casing (3) of the container (1), and whose inner dimensions are selected to be greater than the outer dimensions of the guide means, so that the latter can be inserted into the compacting device alternately in place of the container (1); in that the casing (6) of the compacting device is provided on its inside at the level of the base element (4) with pressure plates (20) which can be pushed against the base element (4) and which increase its base area to the outlet cross-section of the guide means, and in several horizontal planes with clamping means (11) which are individually and horizontally movable by lifting elements (9, 10), and in that the guide means is designed as a guide insert (23, 42 to 47), which can be inserted in centred fashion into the compacting device (6, 8) and can be removed from this, in such a way that the fuel rods (2) can be inserted into the compacting device (6, 8) with a geometrical cross-section suited to compact them in the closert possible packing, in particular an extremely tight hexagonal packing, with the clamping means (11) being movable horizontally by means of the lifting elements (9, 10) by such an amount and being controllable in such a way that they compact the fuel rods (2), starting from the geometrical cross-section of the guide insert (23, 42 to 47), as they are removed.

2. Arrangement according to claim 1, characterised in that the cross-sections of the compacting device (6, 7), of the guide insert (23, 42 to 47) and of the container (1) are such that the fuel rods of at least two fuel elements can be received.

3. Arrangement according to claim 1 or 2, characterised in that a bundle of a number, corresponding at least to the number of fuel rods to be received, of straight guide tubes (24) connected to each other and supported on a frame (25) is used as a guide insert, whose inner diameter is somewhat larger than the diameter of the fuel rods, and which are arranged in such a way that in all cross-sectional planes, the positions of their axes form equilateral triangles, so that adjacent rows of guide tubes are displaced relatively to each other by half the distance between axes within a row.

4. Arrangement according to claim 1 or 2, characterised in that a bundle of a number, corresponding at least to the number of fuel rods to be received, of slightly bent guide tubes (24) connected to each other and supported on a frame (25), is used as a guide insert, whose inner diameter is somewhat greater than the diameter of the fuel rods, and which are arranged in such a way that in the input-side cross-sectional plane, the positions of their axes correspond to the positions of the axes of the fuel rods in the cross-section of the fuel elements to be emptied, and in that in the outlet-side cross-sectional plane, the positions of their axes form equilateral triangles, so that adjacent rows of guide tubes are displaced relatively to each other by half the distance between axes within one row.

5. Arrangement according to claim 1 or 2, characterised in that a bundle of a number, corresponding to the number of rows of fuel rods to be received plus one, of parallel guide plates (42) is used as a guide insert, the inner spacings between which plates are somewhat greater than the diameter of the fuel rods and whose length is selected so that the desired number of fuel rods can be inserted into the space between two guide plates and these are provided on the head side with flat plate strips (45), extending at right angles to the guide plates and likewise in the distance between axes of the fuel rods in the fuel element, and rigidly connected to the guide plates, there being used as clamping means stop- and clamping means (48, 49, 50, 59 and 43, 47) arranged on both sides between two respective guide plates, of which at least one per pair of guide plates is horizontally movable and extends for various depths into the stack of guide plates, in such a manner than when the fuel rods have been inserted, the rows of fuel rods are displaced relative to each other alternately for respectively half the amount of the fuel rod diameter.

6. Arrangement according to claim 5, characterised in that the height between the surface of the base element (4) and the lower edge of the plate strips (45) is somewhat greater than the length of the fuel rods.

7. Arrangement according to claim 5, characterised in that the height between the surface of the base element (4) and the lower edge of the plate strips (45) is somewhat smaller than the length of the fuel rods.

8. Arrangement according to claim 1 or 2, characterised in that the guide insert is made up of two parts, and the input-side part consists of a bundle of a number, corresponding at least to the number of fuel rods to be received, of slightly bent guide tubes (24) connected to each other and supported on a frame (25), the inner diameter of which guide tubes is selected to be somewhat greater than the diameter of the fuel rods and which are arranged in such a way that the positions of their axes in the input-side cross-sectional plane correspond to the positions of the fuel rod axes in the cross-section of the fuel elements to be emptied, and in the output-side cross-sectional plane their axial positions form equilateral triangles, so that adjacent rows of guide tubes are displaced relative to each other by half the distance between centres within one row, and the outlet-side part is made up of a bundle of a number, corresponding to the number of rows of fuel rods to be received plus one, of parallel guide tubes (42), the inner spacings between which guide plates are somewhat greater than the diameter of the fuel rods, wherein the length of the two parts corresponds roughly to the length of the fuel rods and the distances between the rows of guide tubes and the distances between the guide plates in the cross-sectional plane of transfer of the two parts are selected so that when the fuel rods are inserted, they can be formed into rows of the required number and length in the upper section of the guide insert and can be compacted into rows in the lower section.

9. Arrangement according to one of the preceding claims, characterised in that the base element (4) and the head part (5) of the container are provided with apertures (36).

10. Process for handling the arrangement according to claim 3, 4 or 5, characterised in that first of all the container (1) with the base element (4) is inserted into the compacting device (6, 7, 8, 38, 39, 40), in that the base element (4) is then released from the container casing (3) and connected to the compacting device, in that when the container casing (3) has been removed, the guide insert is placed onto the base element (4) located in the compacting device, in that the fuel rods (2) are then introduced one by one or several at a time into the corresponding elements of the guide insert, in that when the last fuel rod has been inserted, the guide insert is removed upwards out of the compacting device, with the inserted fuel rods being kept back, and at the same time with the gradual release of the fuel rods, starting from the base, the clamping means (9, 10, 11) are pressed in the desired direction against the part of the fuel rod bundle released in each case, and compact this in the closest possible packing, in particular closest hexagonal packing; in that when the guide insert has been fully removed, the container casing (3) provided with the head part (5) is placed from above in a centered manner onto the compacted bundle of fuel rods, the clamping means being gradually released, so that the container casing part slides between the clamping means and the bundle of fuel rods into the base element and can be coupled thereto, and in that finally the base element is released from the compacting device and the filled container is lifted out of it.

11. Process according to claim 9, characterised in that tubes (37), designed as cooling dummies, are inserted into spaces in the bundle of fuel rods not occupied by fuel rods, preferably in the centre of the stack cross-section.

**Revendications**

1. Dispositif pour recevoir des barres de combustible épuisé de réacteurs nucléaires, sous forme au moins approximativement compacte, constitué par un conteneur de transport de stockage formé de plusieurs éléments et comprenant un fond portant les barres de combustible et des parois latérales entourant les barres de combustible ainsi qu'un moyen de guidage servant à charger ce conteneur, caractérisé par le fait que le conteneur (1) est constitué par une partie formant enveloppe (3) possédant un contour rectangulaire et notamment carré en projection horizontale, un élément de fond (4) qui doit être relié de façon détachable en cours de fonctionnement à la partie formant enveloppe (3), les dimensions intérieures de l'élément de fond (4) et de la partie formant enveloppe (3) correspondant à la longueur et à la section transversale d'empilage des barres de combustible (2), et par une partie de tête (5) pouvant être montée de façon amovible sur la partie formant enveloppe (3), qu'il est prévu un autre conteneur recevant le premier conteneur (1) et formant dispositif d'entassement dense (6, 7, 8) et qui est constitué par une partie formant enveloppe (6), par une partie de fond (7) reliée rigidement à cette partie formant bloc et par une bride (8) disposée sur le côté de la tête, ainsi qu'un organe de levage (22) disposé sur la partie de fond (7) et servant à accoupler et à désaccoupler l'élément de fond (4) par rapport à la partie formant enveloppe (3) du conteneur (1) et dont les dimensions intérieures sont choisies supérieures aux dimensions extérieures du moyen de guidage de telle sorte que ce dernier peut être introduit en alternance dans le dispositif d'entassement dense, à la place du conteneur (1), que la partie formant enveloppe (6) du dispositif d'entassement dense comporte, au niveau de sa face intérieure et à hauteur de l'élément de fond (4), des tampons de compression (20) pouvant être repoussée contre cet élément de fond et qui augmentent la surface de base de ce dernier au niveau de la section transversale de sortie du moyen de guidage et, dans plusieurs plans horizontaux, des moyens de serrage (11) pouvant être déplacés horizontalement de façon individuelle par des éléments de vérin (9, 10), et que le moyen de guidage est réalisé sous la forme d'un insert de guidage (23, 42 à 47) pouvant être inséré en position centrée dans le dispositif d'entassement dense (6, 8) et pouvant être retiré hors de ce dernier, de telle sorte que les barres de combustible (2) peuvent être introduites dans le dispositif d'entassement dense (6, 8), selon une géométrie en coupe transversale qui est la plus dense possible et notamment la plus dense possible selon une disposition hexagonale, pour l'entassement dense des barres de combustible, les moyens de serrage (11) pouvant être déplacés horizontalement à l'aide des éléments de vérins (9, 10) sur une telle distance et pouvant être commandés de telle sorte qu'ils entassent de façon dense les barres de combustible (2), à partir de la géométrie en coupe transversale de l'insert de guidage (23, 42 à 47), au cours du retrait de ce dernier.

2. Dispositif suivant la revendication 1, caractérisé par le fait que les sections transversales du dispositif d'entassement dense (6, 7), de l'insert de guidage (23, 42 à 47) et du conteneur (1) sont choisie de telle sorte que les barres de combustible d'au moins deux éléments combustibles peuvent être reçues.

3. Dispositif suivant la revendication 1 ou 2, caractérisé par le fait qu'on utilise, comme insert de guidage un faisceau formé d'un nombre, correspondant au moins au nombre des barres de combustible devant être stockées, de tubes rectilignes de guidage (24) reliés entre eux et maintenus sur un cadre (25), et dont le diamètre intérieur est légèrement supérieur au diamètre intérieur des barres de combustible et qui sont disposés de telle sorte que dans tous les plans de section transversale, les positions de leurs axes forment des triangles équilatéraux de telle sorte que des rangées voisines de tubes de guidage sont décalées reciproquement d'une valeur égale à la moitié de l'entre-axe présent à l'intérieur d'une rangée.

4. Dispositif suivant la revendication 1 ou 2, caractérisé par le fait qu'on utilise comme insert de guidage un faisceau formé d'un nombre, correspondant au moins au nombre des barres de combustible devant être stockées, de tubes de guidage (24) reliés entre eux, pouvant être aisément cintrés et qui sont fixés sur un cadre (25) et dont de diamètre intérieur est légèrement supérieur au diamètre des barres de combustible et qui sont disposés de telle sorte que dans le plan de section tranversale côté entrée, les positions des axes des tubes de guidage correspondent aux positions des axes des barres de combustible dans la section transversale des éléments combustibles devant être vidés, et que dans le plan de section transvesale côté sortie, les positions des axes des tubes de guidage forment des triangles équilatéraux de sorte que des rangées voisines de tubes de guidage sont décalées les unes par rapport aux autres d'une valeur égale à la moitié de l'entre-axe présent à l'intérieur d'une rangée.

5. Dispositif suivant la revendication 1 ou 2, caractérisé par le fait qu'on utilise comme insert de guidage, un faisceau formé d'un nombre, correspondant au nombre, accru d'une unité, des rangées parallèles de barres de combustible devant être stockées, de plaques parallèles de guidage (42), dont les distances réciproques sont légèrement supérieures au diamètre des barres de combustible et dont la longueur est choisie de telle sorte que l'on peut introduire le nombre désiré de barres de combustible dans l'espace compris entre deux tôles de guidage, et que ces dernières comportent, du côté de la tête des bandes plates de tôle (45) qui s'étendent prependiculairement aux tôles de guidage, éventuellement à une distance égale à la distance entre-axe des barres de combustible dans l'élément combustible, et sont reliées rigidement aux tôles de guidage, auquel cas on utilise, comme moyens de serrage, des moyens de butée et de serrage (48, 49, 50, 59 et 43, 47) disposés des deux côtés entre deux tôles respectives de guidage et dont l'une au moins est déplaçable horizontalement, dans chaque couple de tôles de guidage, et pénètre à une profondeur variable dans le paquet de tôles de guidage de telle sorte que les rangées de barres de combustible sont décalées réciproquement en alternance d'une valeur égale à la moitié du diamètre des barres de combustible, après l'introduction de ces dernières.

6. Dispositif suivant la revendication 5, caractérisé par le fait que la hauteur entre la surface de l'élément de fond (4) et la bande inférieure de la bande de tôle (45) est légèrement supérieure à la longueur des barres de combustible.

7. Dispositif suivant la revendication 5, caractérisé par le fait que la hauteur entre la surface supérieure de l'élément de fond (4) et le bord inférieur de la bande de tôle (45) est légèrement inférieure à la longueur des barres de combustible.

8. Dispositif suivant la revendication 1 ou 2, caractérisé par le fait que l'insert de guidage est formé de deux parties et que la partie côté entrée est constituée par un faisceau formé d'un nombre, correspondant au moins au nombre des barres de combustible devant être stockées, de tubes de guidage (24) légèrement cintrés, reliés entre et maintenus sur un cadre (25) et dont le diamètre intérieur est légèrement supérieur au diamètre des barres de combustible et qui sont disposé de telle sorte que dans le plan de section transversale côté entrée, les positions des axes des tubes de guidage correspondent aux positions des barres de combustible dans la section transversale des éléments combustibles devant être guidés et, dans le plan de section transversale côté sortie, les positions des axes des tubes de guidage forment des triangles équilatéraux de sorte que des rangées voisines de tubes de guidage sont décalées réciproquement d'une distance égale à la moitié de l'entre-axe à l'intérieur d'une rangée, et que la partie côté sortie est formée par un faisceau d'un nombre, correspondant à un nombre accru d'une unité, des rangées de barres de combustible devant être stockées, de tôles de guidage parallèles (42), dont les écarts réciproques sont légèrement supérieurs au diamètre des barres de combustible, la longueur des deux parties correspondant approximativement à la longueur des barres de combustible, et les distances entre les rangées de tubes de guidage et les distances des tôles de guidage dans le plan de section transversale de jonction des deux parties étant choisies de telle sorte que lors de l'introduction des barres de guidage, ces dernières peuvent être disposées, dans la section supérieure de l'insert de guidage, de manière à former des rangées présentes en un nombre et avec la longueur nécessaire et peuvent être entassées de façon dense par rangées, dans la section inférieure.

9. Disposition suivant les revendications précédentes, caractérisé par le fait que l'élément de fond (4) et la partie de tête (5) du conteneur comportent des ouvertures (36).

10. Procédé pour manipuler le dispositif suivant la revendication 3, 4 ou 5, caractérisé par le fait qu'on introduit tout d'abord le conteneur (1) muni de l'élément de fond (4) dans le dispositif d'entassement dense (7, 8, 38, 39, 40), qu'on détache ensuite l'élément de fond (4) de la partie formant enveloppe (3) du conteneur et qu'on la relie au dispositif d'entassement dense, qu'après le retrait de la partie formant enveloppe (3) de l'enceinte, on met en place l'insert de guidage sur l'élément de fond (4) situé dans le dispositif d'entassement dense et qu'ensuite on introduit individuellement ou simultanément, à plusieurs reprises, les barres de combustible (2) dans les éléments correspondants de l'insert de guidage, qu'après l'introduction de la dernière barre de combustible, on retire l'insert de guidage vers le haut hors du dispositif d'entassement dense, tout en retenant les barres de combustible introduites et que simultanément et au fur et à mesure que les barres de combustible sont libérées de plus en plus, on repousse, en commençant à partir du fond, les moyens de serrage (9, 10, 11) dans la direction désirée contre la partie, qui se libère, du faisceau de barres de combustible et que l'on comprime ce faisceau de barres de combustible avec l'entassement le plus dense possible et notamment l'entassement le plus dense possible avec une configuration hexagonale, qu'après l'extraction complète de l'insert de guidage, on met en place, par le haut et en la centrant, la partie formant enveloppe (3) du conteneur munie de la partie de tête (5), sur le faisceau de barres de combustible entassées, auquel cas on desserre progressivement les moyens de serrage de telle sorte que la partie formant enveloppe du conteneur glisse entre les moyens de serrage et le faisceau de barres de combustible dans l'élément de fond et peut être accouplée à ce dernier et qu'enfin on détache l'élément de fond du dispositif d'entassement dense et que l'on extrait le conteneur rempli, hors de ce dispositif.

11. Procédé suivant la revendication 9, caractérisé par le fait que l'on introduit des tubes (37) réalisés sous la forme de pièges de refroidissement, de préférence au centre de la section transversale d'empilage, en des emplacements du faisceau de barres de combustible non occupées par des barres de combustible.

FIG 1

FIG 2

FIG 3

FIG 4

FIG 5

FIG 6

FIG 7

FIG 8

FIG 9

FIG 10

FIG 11

FIG 12

FIG 13

FIG 14

FIG 15